Europäisches Patentamt

European Patent Office

Office européen des brevets

(19)

(11) EP 0 673 795 B1

(12) EUROPÄISCHE PATENTSCHRIFT

(45) Veröffentlichungstag und Bekanntmachung des Hinweises auf die Patenterteilung:
17.06.1998 Patentblatt 1998/25

(51) Int. Cl.$^6$: B60H 1/24

(21) Anmeldenummer: 95102225.0

(22) Anmeldetag: 17.02.1995

(54) **Rückluftsperre zur Entlüftung des Innenraums eines Kraftfahrzeuges**

Non return air valve for deaerating a vehicle interior

Clapet anti-retour d'air pour la désaération de l'habitacle d'un véhicule

(84) Benannte Vertragsstaaten:
DE FR GB IT

(30) Priorität: 22.03.1994 DE 4409752

(43) Veröffentlichungstag der Anmeldung:
27.09.1995 Patentblatt 1995/39

(73) Patentinhaber:
Bayerische Motoren Werke Aktiengesellschaft
80788 München (DE)

(72) Erfinder:
• Fallert, Jürgen
D-80798 München (DE)
• Holzwarth, Reinhard
D-83527 Haag (Obb.) (DE)

(56) Entgegenhaltungen:
EP-A- 0 446 854          DE-A- 3 709 244
US-A- 2 223 709          US-A- 2 297 892

• PATENT ABSTRACTS OF JAPAN vol. 8 no. 195
(M-323) [1632] & JP-A-59 084612 (NISSAN
JIDOSHA K.K.)

**Beschreibung**

Die Erfindung bezieht sich auf eine Rückluftsperre zur Entlüftung des Innenraums eines Kraftfahrzeuges nach dem Oberbegriff des Anspruchs 1.

Aus der US-A-2 223 709 ist eine Rückluftsperre in Form einer biegesteifen Klappe bekannt. Die Klappe ist über eine exzentrische Lagerung so in ein Gehäuse eingesetzt, daß sie in ihrer Schließlage durch ihr Eigengewicht an einem Anschlag im Gehäuse anliegt. Bei Überdruck im Innenraum des Kraftfahrzeuges hebt die Klappe vom Anschlag ab und ermöglicht eine Entlüftung des Fahrzeuginnenraumes. Auch bei entsprechend hoher Fahrzeuggeschwindigkeit wird die Klappe durch den dann wirksamen Unterdruck im Bereich des Fahrzeughecks ausgelenkt. Bei Unterdruck im Innenraum des Kraftfahrzeuges, z. B. bei während der Fahrt geöffnetem Seitenfenster oder Schiebedach, wird eine Luftströmung in Richtung des Fahrzeuginnenraums und damit das Eindringen von Abgasen verhindert. Auch bei Stillstand des Fahrzeugs und bei Rückenwind ist die Rückluftsperre wirksam. Die Sperrwirkung der Rückluftsperre wird durch das Eigengewicht der Klappe und gegebenenfalls durch den von außen wirkenden Überdruck erzielt, wodurch die Klappe am Anschlag des Gehäuses zur Anlage kommt.

Bei mittleren und niedrigen Geschwindigkeiten wird die Klappe, insbesondere bei kürzeren Fahrzeugen, bei denen die Anbringung der Rückluftsperre zwangsläufig im hochturbulenten Nachlauf des Fahrzeugs liegt, zum Flattern angeregt. Die Klappe schlägt infolge der durch die Luftverwirbelungen im Heckbereich des Fahrzeuges erzeugten Druckschwankungen ungedämpft am Anschlag an, wodurch Geräusche entstehen, die den Fahrkomfort mindern und insbesondere im Fondbereich zu einem erhöhten Geräuschniveau im Fahrgastraum beitragen. Darüber hinaus ist nicht auszuchließen, daß auch bei höherer Geschwindigkeit durch Luftverwirbelungen Schlaggeräusche am Anschlag auftreten. In jedem Fall schlägt die Klappe aufgrund ihres Eigengewichts bei Wegfall des Überdrucks im Fahrzeug bzw. des Unterdrucks außerhalb des Fahrzeugs ungedämpft am Anschlag an.

Aufgabe der Erfindung ist es, eine Rückluftsperre bereitzustellen, die unempfindlich auf Druckschwankungen reagiert und sich durch eine geringe Geräuschentwicklung auszeichnet.

Diese Aufgabe wird durch die Merkmale des Anspruchs 1 gelöst.

Durch die Wölbung der Klappe entsteht eine Art Tragflügelprofil, so daß bei einer Luftströmung in Richtung der Außenseite des Fahrzeuges eine Auftriebskraft auf die Klappe wirkt. Hierdurch ergibt sich eine Selbststabilisierung der Öffnungsstellung der Klappe bereits bei geringen Strömungsgeschwindigkeiten. Damit bleibt die Klappe unabhängig von immer vorhandenen kleinen Druckschwankungen infolge von Luftverwirbelungen an der Fahrzeugaußenseite so lange in ihrer stabilen Öffnungsstellung, als die Klappe von Luft umströmt wird. Auch bei einer Verringerung der Strömungsgeschwindigkeit bis unter den Betrag, der für ein Öffnen der Klappe erforderlich ist, bewirkt die entgegen der Gewichtskraft gerichtete Auftriebskraft ein sanfteres Schließen der Klappe und damit ein gedämpftes Anlegen der Klappe an den Anschlag.

Auf eine Abdichtung kann auch bei der erfindungsgemäßen Rückluftsperre nicht verzichtet werden. Gemäß Anspruch 2 ist es besonders vorteilhaft, im Anlagebereich der oberen bzw. unteren Fläche der Klappe jeweils eine Nut vorzusehen, in die eine Dichtung in einfacher Weise eingesetzt werden kann. Die aus der Nut vorstehende Dichtung bewirkt nicht nur die Abdichtung der Klappe in ihrer Schließlage, sondern auch eine Dämpfung der Schließgeräusche beim Auftreffen der Klappe auf der Dichtung.

Durch die vorteilhafte Weiterbildung der Erfindung nach Anspruch 3 ergeben sich besonders geringe Herstell- und Montagekosten. Die Klappe kann beispielsweise besonders kostengünstig im Spritzgußverfahren einstückig hergestellt werden.

Die Erfindung läßt zahlreiche Ausführungsformen zu. Zur Verdeutlichung ihres Grundprinzips ist ein einfaches Ausführungsbeispiel in der Zeichnung dargestellt und nachfolgend beschrieben. Es zeigt:

Figur 1        eine schematische Darstellung der erfindungsgemäßen Rückluftsperre in der Vorderansicht,

Figur 2        die Rückluftsperre in schematischer Schnittdarstellung entsprechend der Schnittverlaufslinie II-II in Figur 1 (Schließlage),

Figur 3        eine der Figur 2 entsprechende Darstellung der Rückluftsperre in ihrer Offenstellung und

Figur 4a - c    Darstellungen der bei unterschiedlichen Positionen der Klappe wirkenden Kräfte.

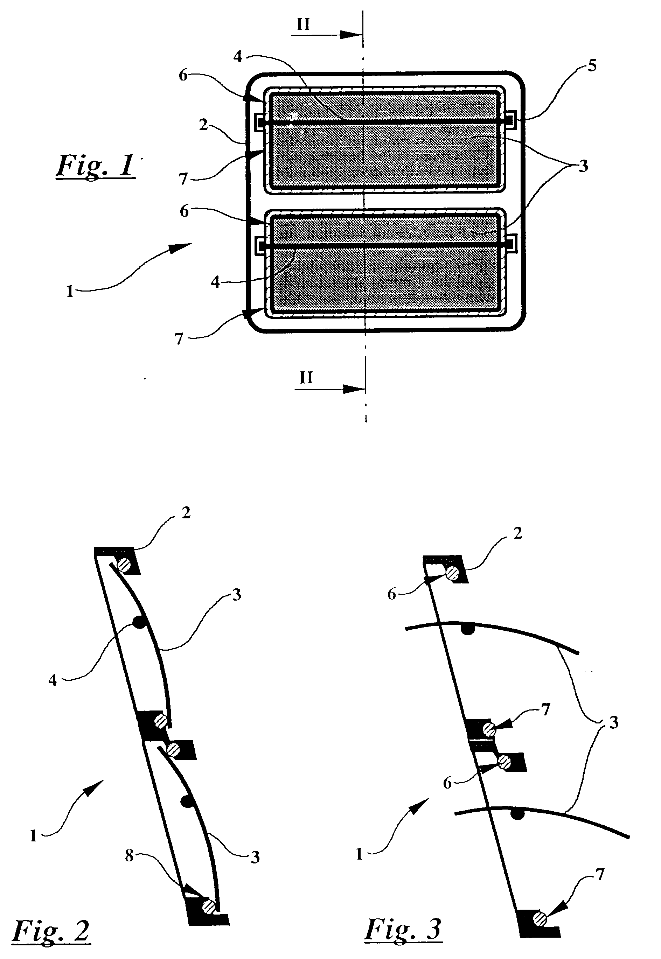

Die Figuren 1 bis 3 zeigen eine erfindungsgemäße Rückluftsperre 1 in schematisierter Darstellung. Die Rückluftsperre 1 besteht aus einem Gehäuse 2, in das zwei Klappen 3 übereinander eingesetzt sind. Die Klappen 3 sind rechteckförmig und, wie aus den Figuren 2 und 3 hervorgeht, konvex nach außen gewölbt. Beide Klappen 3 besitzen waagrecht verlaufende Drehachsen 4, die im Gehäuse 2 in Lagerstellen 5 festgelegt sind. Die Drehachsen 4 sind gegenüber den waagrechten Symmetrieachsen der Klappen 3 außermittig etwas nach oben versetzt. U-förmige obere und untere Dichtungen 6 bzw. 7, die in Nuten 8 des Gehäuses 2 eingesetzt sind, bewirken eine Abdichtung der Klappen 3 gegenüber dem Gehäuse 2.

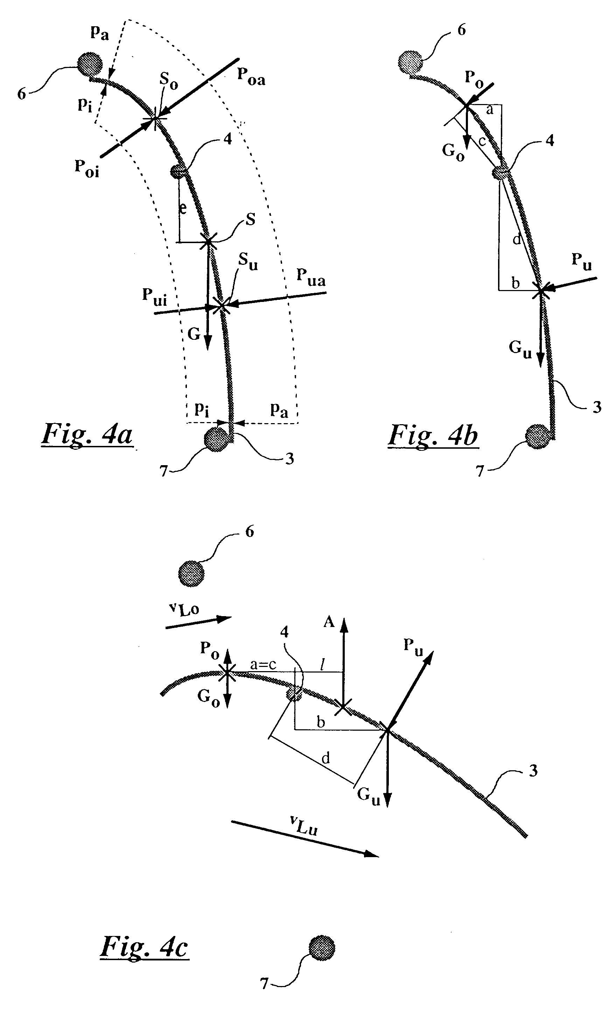

In den Figuren 4 a - c sind die an den Klappen 3 wirkenden Kräfte und Momente dargestellt.

Figur 4a zeigt die an der Klappe 3 angreifenden Druck- und Gewichtskräfte:
Innen- und Außendruck $p_i$ bzw. $p_a$ wirken flächig auf die Innen- bzw. Außenseite der Klappe 3. Hieraus resultieren auf der Innenseite der oberen bzw. unteren Fläche der Klappe 3 die Druckkräfte $P_{oi}$ und $P_{ui}$. In gleicher Weise ergeben sich auf der Außenseite der Klappe 3 entgegengesetzt gerichtete Druckkräfte $P_{oa}$ und $P_{ua}$. Durch die exzentrische Lagerung ist die Drehachse 4 im Abstand e vom Flächen- und Massengesamtschwerpunkt S angeordnet. Während die Gewichtskraft G im Schwerpunkt S angreift, ergeben sich für obere und untere Fläche der Klappe 3 Teilschwerpunkte $S_o$ und $S_u$. In diesen Teilschwerpunkten $S_o$ und $S_u$ greifen die Teilgewichtskräfte $G_o$ und $G_u$ (siehe Fig. 4b) von oberer und unterer Fläche der Klappe 3 ebenso an wie die aus der Differenz der oben beschriebenen Druckkräfte ergebenden resultierenden Teildruckkräfte $P_o = P_{oa} - P_{oi}$ und $P_u = P_{ua} - P_{ui}$ (siehe Figur 4b), deren Richtung und Betrag von der Größe des Außen- und Innendrucks $p_a$ bzw. $p_i$ abhängig ist.

Figur 4b zeigt die an der geschlossenen Klappe 3 angreifenden Kräfte und Momente. Durch die exzentrische Lagerung der Klappe 3 ergeben sich für die wirksamen Druckkräfte $P_o$ und $P_u$ sowie die Gewichtskräfte $G_o$ und $G_u$ unterschiedlich große Hebelarme c und d bzw. a und b, so daß die Klappe 3 geschlossen bleibt, wenn

$$p_i < p_a \text{ oder } p_i = p_a.$$

In der Schließlage der Klappe 3 gilt hierbei folgende Ungleichung:

$$G_o \times a + P_o \times c < G_u \times b + P_u \times d.$$

Übersteigt der Innendruck $p_i$ den Außendruck $p_a$ um einen bestimmten Betrag, so kompensiert die nun gegenüber der Fig. 4b entgegengesetzt gerichtete Druckkraft $P_u$ an der größeren unteren Fläche der Klappe 3 das Schließmoment aus der Gewichtskraftkomponente $G_u$. Damit öffnet sich die Klappe 3 gemäß der Ungleichung

$$G_o \times a + P_u \times d > G_u \times b + P_o \times c.$$

Bei geöffneter Klappe 3 setzt ein Luftstrom ein, der zu beiden Seiten der Klappe 3 aus dem Fahrzeuginneren nach außen strömt. Aufgrund des gekrümmten Querschnitts der Klappe 3 entsteht mit der Luftströmung zusätzliche eine Auftriebskraft A, die mit Abstand l zur Drehachse wirkt (Fig. 4c). Diese Auftriebskraft A ist eine dynamische, von den Strömungsgeschwindigkeiten $v_{Lo}$ und $v_{Lu}$ abhängige Größe, die stabilisierend auf den momentanen Öffnungswinkel der Klappe 3 wirkt.

**Patentansprüche**

1. Rückluftsperre zur Entlüftung des Innenraums eines Kraftfahrzeuges, mit wenigstens einer in eine Öffnung der Karosserie des Kraftfahrzeuges einsetzbaren Klappe (3) aus biegesteifem Material, die in Richtung des Fahrzeuginnenraums sperrt und um eine waagrechte und außermittig oberhalb des Massen- bzw. Flächenschwerpunktes (S) der Klappe (3) verlaufende Drehachse (4) drehbar gelagert ist,
dadurch gekennzeichnet, daß die Klappe (3) in Richtung des Fahrzeugäußeren konvex gewölbt ist.

2. Rückluftsperre nach Anspruch 1, wobei die Klappe (3) in ein Gehäuse (2) eingesetzt und in ihrer Schließlage durch ihr Eigengewicht an einem Anschlag im Gehäuse anliegt,
dadurch gekennzeichnet, daß entlang des Anschlags der Klappe (3) im Gehäuse (2) Nuten (8) mit vorstehenden Dichtungen (6, 7) vorgesehen sind.

3. Rückluftsperre nach Anspruch 2,
dadurch gekennzeichnet, daß die Klappe (3) eine einstückig angeformte Drehachse (4) aufweist, die in eine Lagerung (Lagerstelle 5) am Gehäuse (2) einklipsbar ist.

**Claims**

1. A non-return air valve for the ventilation of the interior of a motor vehicle, with at least one flap (3), of rigid material, which can be set into an opening in the bodywork of the motor vehicle, which closes in the direction of the vehicle interior and is mounted so as to be able to turn about a horizontal turning axle (4), which runs eccentrically above the mass or surface centre of gravity (S) of the flap (3), characterised in that the flap (3) is convex curved in the direction of the vehicle exterior.

2. A non-return air valve according to Claim 1, whereby the flap (3) is set into a housing (2) and in its closed position rests by its own weight against a stop in the housing, characterised in that grooves (8) are provided in the housing (2) along the stop for the flap (3) with protruding seals (6, 7).

3. A non-return air valve according to Claim 2, characterised in that the flap (3) has a one piece turning axle (4), formed with it, which can be clipped into a bearing (bearing position 5) in the housing (2).

## Revendications

1. Clapet anti-retour d'air de l'habitacle d'un véhicule à moteur, comportant au moins un clapet (3) en une matière résistant à la flexion, que l'on peut insérer dans une ouverture de la carrosserie du véhicule à moteur, qui bloque l'écoulement en direction de l'habitacle du véhicule et qui est monté de façon à pouvoir tourner autour d'un axe de rotation (4), qui s'étend horizontalement et de façon excentrée au dessus du centre de gravité de la masse ou de la surface (S) du clapet (3),
caractérisé en ce que
le clapet (3) est bombé de façon convexe en direction de l'extérieur du véhicule.

2. Clapet anti-retour d'air selon la revendication 1, dans lequel le clapet (3) est inséré dans un carter (2) et repose, quand il est en position fermée, par son poids propre sur une butée prévue dans le carter,
caractérisé en ce que
le long de la butée du clapet (3) il est prévu dans le carter (2), des rainures (8) munies de joints d'étanchéité saillants (6,7).

3. Clapet anti-retour d'air selon la revendication 2, caractérisé en ce que
le clapet (3) présente un axe de rotation (4) formé d'une seule pièce, qui peut être enclipsé dans une monture (palier 5) sur le carter (2).

*Fig. 1*

*Fig. 2*

*Fig. 3*

*Fig. 4a*

*Fig. 4b*

*Fig. 4c*